(19) Europäisches Patentamt
European Patent Office
Office européen des brevets

(11) Veröffentlichungsnummer: **0 280 158 B1**

(12) # EUROPÄISCHE PATENTSCHRIFT

(45) Veröffentlichungstag der Patentschrift: **08.01.92**

(51) Int. Cl.[5]: **C04B 41/86**

(21) Anmeldenummer: **88102233.9**

(22) Anmeldetag: **16.02.88**

(54) **Verfahren zur Herstellung farbiger Dekorationen auf keramischen Erzeugnissen.**

(30) Priorität: **21.02.87 DE 3705572**

(43) Veröffentlichungstag der Anmeldung:
**31.08.88 Patentblatt 88/35**

(45) Bekanntmachung des Hinweises auf die Patenterteilung:
**08.01.92 Patentblatt 92/02**

(84) Benannte Vertragsstaaten:
**AT CH DE ES FR GB IT LI NL**

(56) Entgegenhaltungen:
**GB-A- 1 404 455**
**US-A- 4 204 876**

**DERWENT ACCESSION NO. 82-20 740, Questel Telesystemes, DERWENT PUBLICATIONS LTD., London**

(73) Patentinhaber: **WÄCHTERSBACHER KERAMIK OTTO FRIEDRICH FÜRST ZU YSENBURG UND BÜDINGEN GMBH & CO. KG**

**W-6486 Brachttal 1(DE)**

(72) Erfinder: **Nawothnig, Klaus, Dipl.-Ing.(FH)**
**Quellenweg 16**
**W-6486 Brachttal 1(DE)**

(74) Vertreter: **Stoffregen, Hans-Herbert, Dr. Dipl.-Phys. et al**
**Patentanwalt, Salzstrasse 11 a, Postfach 21 44**
**W-6450 Hanau (Main) 1(DE)**

**EP 0 280 158 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Verfahren zur Herstellung farbiger Dekorationen auf keramischen Erzeugnissen durch Aufbringen aufgeschäumter Pigment-Wasser-Suspensionen.

Keramische Erzeugnisse finden aufgrund ihrer bekannten guten Materialeigenschaften in der Industrie, Technik und Haushalt als grob- und feinkeramische Erzeugnisse vielfache Anwendungsmöglichkeiten.

Der Begriff "keramische Erzeugnisse" umfaßt die aus silikatischen und nichtsilikatischen Rohstoffen durch Verformung bei Raumtemperatur und Hartbrennen zwischen 600 - 2000 °C hergestellten Produkte.

Während bei den grobkeramischen Erzeugnissen, wie Ziegel, Klinker, Steinzeug und feuerfesten Baustoffen ihre physikalischen und mechanischen Eigenschaften im Vordergrund stehen, wird bei den feinkeramischen Erzeugnissen, wie Geschirr, Wandplatten, Fliesen, Sanitärobjekten und Luxuserzeugnissen darüberhinaus der farblich dekorativen Gestaltung der Oberflächen großes Gewicht beigemessen.

Hierzu werden auf die gebrannten oder ungebrannten keramischen Erzeugnisse, welche glasiert oder unglasiert sein können, in der Regel wässrige Pigment-oder Farbkörper-Suspensionen mittels Spritzen, Gießen, Tauchen oder Druckverfahren aufgetragen und anschließend bei Temperaturen zwischen 600 - 1500 °C zu der fest haftenden Dekorschicht eingebrannt.

Aufgabe der vorliegenden Erfindung war es nun, ein neues technisches Verfahren zu finden, welches es gestattet, neuartige Oberflächeneffekte auf keramischen Erzeugnissen zu erzielen.

Diese Aufgabe wird durch das erfindungsgemäße Verfahren gelöst.

Gegenstand der Erfindung ist daher ein Verfahren zur Herstellung farbiger Dekorationen auf keramischen Erzeugnissen durch Aufbringen von wässrigen Pigment-oder Farbkörpersuspensionen auf den Keramikkörper und anschließendes Einbrennen bei Temperaturen zwischen 600 - 1500 °C, welches dadurch gekennzeichnet ist, daß die Pigment- oder Farbkörpersuspensionen unter Mitverwendung ein oder mehrerer grenzflächenaktiver Substanzen aufgeschäumt und der Keamikkörper mit der Schaumphase in Kontakt gebracht wird.

Weitere Gegenstände der Erfindung sind die Ausführungsformen des Verfahrens gemäß den Ansprüchen.

Die erfindungsgemäß zur Farbgebung mitverwendeten Pigmente sind die auf dem vorliegenden Gebiet allgemein handelsüblichen feuerfesten Verbindungen vom Spinell-Typus, vom Zirconsilicat-Typ oder die nach dem sogenannten Einschlußverfahren hergestellten keramischen Farben. Eine umfassende Aufzählung von geeigneten Verbindungen ist in Ullmanns Enzyklopädie der technischen Chemie, 1972, Band 14, Seite 1 ff sowie der dort aufgeführten weiteren Literatur gegeben.

Da bei dem erfindungsgemäßen Verfahren die Aufbringung des Pigments bzw. des Farbkörpers auf das keramische Erzeugnis aus der Schaumphase erfolgt, kommt der Keramikkörper nicht in direkten Kontakt mit der ungeschäumten wässrigen Phase.

Daher ist die Pigmentkonzentration in der wässrigen Phase (Trübe) für das erfindungsgemäße Verfahren unkritisch und innerhalb relativ weiter Grenzen variierbar.

Im allgemeinen haben sich Konzentrationen im Gewichtsverhältnis von Wasser zu Pigment von 0,7 : 1 bis 20 : 1, insbesondere 0,9 : 1 bis 2 : 1, als vorteilhaft erwiesen. Im Bedarfsfall sind auch zur Erzielung spezieller Effekte andere Verhältnisse möglich, jedoch wird ein Verhältnis von 1 : 1 bevorzugt.

Für die Durchführung des erfindungsgemäßen Verfahrens ist es erforderlich, die Pigment- oder Farbkörperpartikel in ausreichender Konzentration in der Schaumphase anzureichern.

Dazu ist es erforderlich, daß sich die in Wasser aufgeschlämmten Partikel an Luftblasen heften und von ihnen an die Oberfläche getragen werden können. Aufgrund der äußeren Gitterkräfte der Kristalloberfläche sowie der wasserstoffaffinen Sauerstoffatome wird aber eine Schicht Wassermoleküle mehr oder weniger fest um das Partikel angeordnet. Diese Wasserschicht verhindert eine Adhäsion der Luftblasen.

Es ist daher erforderlich, die Benetzbarkeit der Partikel durch Wasser herabzusetzen, um eine Haftung der Luftblasen zu erreichen. Zu diesem Zweck müssen die Oberflächen hydrophobiert werden. Bei einigen Mineralien, wie z.B. Graphit und Molybdänglanz, welche von Natur aus hydrophobe Oberflächen besitzen, ist dies nicht mehr erforderlich.

Die zur Hydrophobierung der Pigmentpartikeloberflächen verwendeten Substanzen (Sammler) sind natürliche oder synthetische grenzflächenaktive Verbindungen, welche an einer längeren Kohlenwasserstoffkette im allgemeinen mindestens eine chemisch aktive polare Gruppe tragen (ionenaktive Tenside). Als ionenaktive Tenside können erfindungsgemäß Verbindungen verwendet werden, deren Kohlenwasserstoffrest geradkettig oder verzweigt, gesättigt oder ungesättigt, aromatisch, cyclisch oder dicyclisch sein und gegebenenfalls auch Heteroatome, wie Sauerstoff, Stickstoff oder Schwefel enthalten kann. Der Kohlenwasserstoffrest weist in der Regel 6 bis 22 Kohlenstoffatome in der Kette auf und trägt eine oder mehrere hydrophile Gruppen.

Geeignete anionische Tenside sind Carboxylate, Sarcoside, Sulfamidocarboxylate, Sulfate, Alkyl- und Arylethersulfate, Amidoethersulfate, sulfatierte Carboxylate, sulfatierte Carbonsäureglyceride, sulfatierte Carbonsäureester und -amide, Alkylsulfonate, sulfonierte Carboxylate, Arylsulfonate, sulforierte Carbonsäureester und -amide, Carboxylester- und Carboxylamidsulfonate, Sulfobernsteinsäureester, Ethersulfonate, Thiosulfate, Phosphate, Glycerinphosphate, Phosphite, Phosphonate, Phosphinate, Dithiophosphate, Xanthate.

Geeignete kationische Tenside sind primäre, sekundäre, tertiäre und quartäre Ammoniumsalze, Benzylammoniumsalze,. Alkanolammoniumsalze, Pyridiniumsalze, Imidazoliniumsalze, Oxazoliniumsalze, Thiazoliniumsalze, Salze von Aminoxiden, Sulfoniumsalze, Chinoliniumsalze, Isochinoliniumsalze, Tropyliumsalze.

Ebenfalls geeignet sind zwitterionische Tenside, wie Aminoxide, Imidazolincarboxylate, Betaine, Aminocarbonsäuren, Ampholyte oder nichtionische Tenside, wie Polyglykolether, Arylpolyglykolether, Polyglykolester, Polyglykolamide, Polypropylenglykolether, -ester und -amide, Polyalkohole, Polyamine, Glycoside.

Bevorzugt werden erfindungsgemäß Alkylbenzolsulfonate, Alkylsulfate, Alkylethersulfate, Alkylsulfosuccinate, Aminoxide und Alkanolamide. Diese Verbindungen können allein oder als Mischung miteinander oder untereinander eingesetzt werden.

Geeignete Alkylbenzolsulfonate entsprechen der Formel (1)

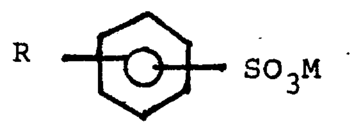

(1)

wobei R einen geradkettigen oder verzweigten Alkylrest mit 4 - 16, vorzugsweise 8 bis 12 Kohlenstoffatomen und M ein Alkalimetallkation oder Ammoniumion, vorzugsweise Natriumion, darstellen.

Geeignete Alkylsuflate bzw. Alkylethersulfate entsprechen der Formel (2)

$R(-O-CH_2-CH_2)_nO-SO_3M$ (2)

wobei R einen geradkettigen oder verzweigten Alkylrest mit 6 - 22, vorzugsweise 12 - 14 C-Atomen, M ein Alkalimetallkation oder Ammoniumion, vorzugsweise ein Natriumion, darstellen, und n einen Wert zwischen 0 - 10, vorzugsweise 2 - 5, insbesondere 3, bedeutet.

Geeignete Alkylsulfosuccinate entsprechen der Formel (3)

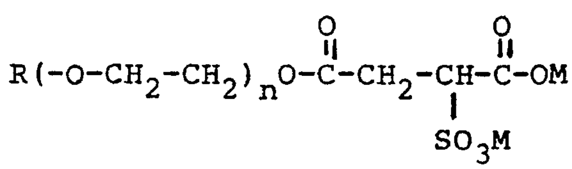

(3)

wobei R einen geradkettigen oder verzweigten Alkylrest mit 6 - 22, vorzugsweise 12 - 14 C-Atomen, M ein Alkalimetallkation oder Ammoniumion, vorzugsweise ein Natriumion, darstellen, und n einen Wert zwischen 0 - 10, vorzugsweise 2 - 5, insbesondere 3 bedeutet.

Geeignete Alkanolamide entsprechend der Formel (4)

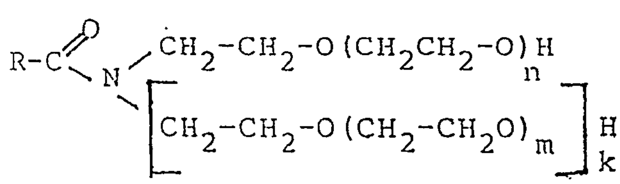

(4)

wobei R einen geradkettigen oder verzweigten Alkylrest mit 6 bis 22, vorzugsweise 8 - 18 C-Atomen darstellt, n und m gleich oder verschieden eine Zahl von 0 - 10, vorzugsweise 3 und K 0 oder 1 bedeuten kann.

Geeignete Aminoxide entsprechen der Formel (5)

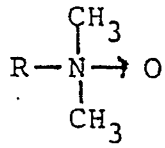

wobei R ein geradkettiger oder verzweigter Alkylrest mit 6 - 22, vorzugsweise 8 - 18 C-Atomen sein kann.

Die Auswahl der Art und der Menge an geeigneter Verbindung ist neben der Art und Korngröße des Pigments auch von einer Reihe anderer Faktoren, wie z.B. dem Härtegrad des verwendeten Wassers, dem pH-Wert in der wässrigen Phase abhängig. Ausschlaggebendes Kriterium ist letztlich die Haftfestigkeit der Gasblase an dem Partikel.

Die Partikelgröße der erfindungsgemäß mitverwendeten Pigmente kann zwischen ca. 0,01 - 100 $\mu$m betragen, wobei die handelsüblichen Pigmente im allgemeinen mit 0,1 - 10 $\mu$m angegeben werden.

Es ist bekannt, daß die Haftintensität der Gasblase mit größerwerdendem Randwinkel wächst. Daher ist die Bestimmung des Randwinkels; welcher nach den bekannten Methoden durch einfache physikalische Messung bestimmt werden kann, ein sicheres Kriterium für die Beurteilung der Wirksamkeit der insbesondere anionenaktiven Tenside.

Die visuelle Beobachtung der Randwinkel unter Veränderung verschiedener Parameter, wie pH-Wert, wechselnde Konzentration des oder der grenzflächenaktiven Substanzen oder mitverwendeter Zusatzstoffe, ermöglicht auch anhand einer geringen Anzahl von Versuchen das Gebiet abzugrenzen,in welchem die in der Praxis durchzuführenden Optimierungsversuche stattfinden. Das Gebiet, in dem die Blase nicht haftet, kann ausgeschieden werden.

In der Praxis haben sich Mengen von 0,001 bis 10 g, vorzugsweise 0,01 - 1g, Tenside pro 100 g Pigment als praktikabel für die Durchführung des erfindungsgemäßen Verfahrens erwiesen, wobei auch Partikel um ca. 0,1 $\mu$m und darunter mitverwendet werden können.

Die Haftung der Luftblasen an den Partikeln ist zwar eine notwendige aber noch keine hinreichende Bedingung für die Durchführung des erfindungsgemäßen Verfahrens. Wenn eine Luftblase mit dem Partikel an die Oberfläche gelangt, platzt sie normalerweise und das Teilchen sinkt wieder ab. Es ist daher erforderlich, die Luftblasen so zu stabilisieren, daß sie einen Schaum bilden, der gemeinsam mit dem Pigmentpartikel auf den Keramikkörper abgestrichen werden kann.

Die erfindungsgemäß mitverwendbaren Schäumer sind natürliche oder synthetische organische Verbindungen, welche eine polare hydrophile Gruppe (OH, COOH, CO, $NH_2$) und einen hydrophoben Kohlenwasserstoffrest aufweisen.

Schäumer senken die Oberflächenspannung des Wassers, da sie selbst eine geringere Oberflächenspannung als dieses aufweisen. Für eine gute Verteilung in der wässrigen Phase ist daher eine gewisse Wasserlöslichkeit Voraussetzung.
Durch Art und Menge des Schäumers kann die Blasengröße gesteuert werden und dadurch auch deren Festigkeit und Zusammenhalt.

Die erfindungsgemäß bevorzugt verwendeten Schäumer weisen keine Strukturen auf, die zu Parallelorientierung führen. Deshalb werden Kohlenwasserstoffe mit verzweigten Ketten und unsymmetrisch angeordneten Kohlenwasserstoffgruppen verwendet.

Der Schaum soll elastisch und ein für die Praxis ausreichende Beständigkeit aufweisen, im Kontakt mit dem Keramikkörper jedoch relativ leicht zerstört werden können.
Verbindungen mit langer unpolarer Kette bilden Blasen von hoher Festigkeit, aber geringer Beständigkeit, solche mit kurzer Kette dagegen Blasen mit geringer Festigkeit, aber großer Beständigkeit. Anhand dieser allgemeinen Regel bedarf es nur einiger orientierender Versuche, den für das vorliegende System günstigen Schäumer zu ermitteln.

Da kationische Tenside ebenso wie einige anionische Tenside, z.B. die Alkalisalze der Fettsäuren und Alkylsulfate, gleichzeitig auch als Schäumer wirken, kann gegebenenfalls auch die Mitverwendung von Schaumregulatoren erforderlich werden.

Neben den Schäumern mit mehr oder weniger langem Kohlenwasserstoffrest können sowohl Polypropylenglykole verschiedener Kettenlänge, Triethoxybutan oder Methylisobutylcarbinol als auch Terpene oder Kresole mitverwendet werden.

Die Schäumermengen liegen im Bereich von 0,005 bis 0,05 g/kg Pigment; bei zu hohen Konzentrationen hört die Schaumbildung auf.

Die Sorption der grenzflächenaktiven Substanzen an die Grenzoberfläche ist von dem chemischen Milieu in der wässrigen Phase, insbesondere vom pH-Wert, stark abhängig. Erfindungsgemäß wird vorzugsweise im pH-Bereich von 3 - 10, insbesondere 6 - 8 gearbeitet.

Aufgrund der dadurch regulierbaren Hydrophobie von Pigmentpartikeln verschiedener Zusammensetzung können Pigmente gezielter Mischung in die Schaumphase gebracht werden und auf dem Keramikkörper abgeschieden werden.

Ebenfalls mitverwendbare, die Sorption der Sammler an den Pigmenten aktivierenden und passivierenden Zusätze - sogenannte Regler - unterstützen den durch die Änderung des pH-Wertes erzielbaren Effekt. Ob ein Reagenz desaktivierend (Drücker) oder aktivierend (Beleber) wirkt, ist von den jeweiligen Verhältnissen abhängig, weshalb keine generelle Einteilung möglich ist. Für nichtsulfidische Pigmente wird Wasserglas als modifizierendes Reagenz eingesetzt.

Weiterhin ist die Größe der Luftblasen von Bedeutung und muß den jeweiligen Verhältnissen angepaßt werden.

Luftblasen, die eine bestimmte Größe überschreiten, haften nicht für längere Zeit an den hydrophobierten Partikeln, sondern lösen sich ab und steigen nach oben. Andererseits darf eine gewisse Mindestgröße nicht unterschritten werden, da der Auftrieb der Blase dann nicht mehr ausreicht, um das Partikel nach oben zu tragen. Neben anderen Faktoren, wie Art der Erzeugung der Luftblasen und deren Strömungsverhalten, werden die Blasengrößen also in der Praxis durch die Partikelgrößen mitbestimmt.

Die Bildung der Luftblasen in der wässrigen Pigment-Tensid-Wasser-Suspension erfolgt nach den in der Technik bekannten Methoden mittels der hier gebräuchlichen Vorrichtungen.

In Behälter verschiedenartiger Konstruktion wird von unten Luft eingeführt und durch geeignete Düsen fein verteilt oder durch hochtourige Rührwerke (Rotoren) mechanisch in ein Gemisch von Blasen verschiedener Größen zerschlagen.

Geeignet ist für das erfindungsgemäße Verfahren im Prinzip jedes dieser Verfahren, wobei die geometrische Ausbildung in Anlehnung an die technischen Vorbilder erfolgen oder aber frei an die betrieblichen Bedingungen angepaßt werden kann.

Die Kriterien für die Wahl der geeigneten grenzflächenaktiven Substanzen - in Abhängigkeit der chemischen Zusammensetzung der Pigmente - sowie der ggf. mitzuverwendenden Hilfsreagenzien, wie Schaumregulatoren, Drücker, Beleber,sind aus der Technik ebenso bekannt wie die Apparaturen zur Schaumerzeugung. In Anlehnung an diese Techniken und Kenntnisse wird auch das erfindungsgemäße Verfahren durchgeführt, wobei sich das Gesamtverfahren in die vier aufeinanderfolgenden (schematischen) Teilschritte gliedern läßt:

1. Herstellung einer Pigmentsuspension (Trübe)
2. Begasung der Suspension in Verbindung mit der gleichzeitigen Erzeugung einer Schaumphase
3. Abscheidung des Schaums auf dem Keramikkörper
4. Brennvorgang

Die Optimierung der einzelnen Teilschritte läßt sich anhand der oben angegebenen und allgemein bekannten technischen, chemischen oder physikalischen Zusammenhänge anhand einiger orientierender Versuche schnell und problemlos durchführen (Ullmanns Enzyklopädie der technischen Chemie, 1977, Bd. 2, 4. Auflage, S. 110 ff).

Durch entsprechende Auswahl der Pigmente ergeben sich vielfältige Kombinationsmöglichkeiten für die Farbgebung von Untergrund und Muster. Alle auf dem Keramikgebiet zur Farbgebung eingesetzten feuerfesten Pigmente sind allein oder in Kombination verwendbar.

Mit dem erfindungsgemäßen Verfahren können sowohl Unterglasur-, Inglasur- als auch Aufglasurdekorationen aufgebracht werden. Bevorzugt wird die Inglasurdekoration.

Hiebei wird der glasierte ungebrannte Formkörper manuell oder durch mechanische Vorrichtungen so in die Schaumphase eingebracht, daß sich der Schaum auf der gesamten Oberfläche anheften kann.

Falls gewünscht, können zur Erzielung besonderer Effekte auch Teile der Oberfläche abgedeckt werden. Beim Kontakt mit dem Formkörper bricht der Schaum und das Pigment lagert sich ab. Da sich das Pigment nur in der Flüssigkeit zwischen den Blasenwänden befindet, wird es auch in dieser räumlichen Verteilung und der jeweiligen Konzentration auf dem Formkörper abgeschieden.

Dadurch wird eine zweidimensionale Abbildung des dreidimensionalen Schaums auf dem Formkörper erzielt, welche in etwa mit der Oberflächenzeichnung von Marmor verglichen werden kann. Durch spezielle Auswahl der Glasur, Pigmente und Verfahrensbedingungen lassen sich daher mit Hilfe des erfindungsgemäßen Verfahrens "marmorierte" Oberflächen in den gewünschten Farb- und Formkombinationen herstellen.

## Ausführungsbeispiel

Die Schäumungszelle besteht aus einem trichterförmigen Behälter aus Edelstahl mit einem oberen Durchmesser von 70 cm, einer Höhe von 50 cm, dessen unteres Ende zu einem Luftanschlußstutzen mit

einem Durchmesser von 1 cm ausgebildet ist. Um diesen Behälter ist ein weiterer baugleicher Behälter mit einem oberen Durchmesser von 120 cm, einer Höhe von 80 cm angeordnet, dessen unteres Ende zu einem Ablaßstutzen von 2 cm Durchmesser ausgebildet ist und der in einen Vorratsbehälter führt.

Die schäumbare Mischung (Trübe) besteht aus:

1. 2,4 Gew.-Teilen Cocosfettsäurediethanolamid
2. 7,5 Gew.-Teilen Dodecylbenzolsulfonat-Na
3. 3,6 Gew.-Teilen Bentonit (Quellton ≦ca. 60 µm)
4. 750,0 Gew.-Teilen Zirkonsilikat *
5. 750,0 Gew.-Teilen Bleimonosilikat *
6. 1486,5 Gew.-Teilen Leitungswasser 18° dH

* Fa. Reimbold und Strick, Köln

In einer Kugelmühle werden die oben erwähnten Komponenten, mit Ausnahme der ersten beiden, ca. 5 h zerkleinert und gemischt. Die Komponenten 1 und 2 werden zum Schluß in der Mischung verteilt.

Die Kugelmühlen bestehen in der Regel aus einem verschließbaren zylindrischen Porzellangefäß, das mit Porzellankugeln (Ø 1 cm) zu einem Drittel gefüllt ist.

Der gleiche Volumenanteil wird als Trübe eingegeben.

Die Begasung der vorbereiteten Trübe erfolgt in trichterförmigen, geöffneten Schäumungszellen durch Luft, die mit einem Druck von 0,01 bis 0,05 bar über eine Düse mit einer Bohrung von ca. 1 mm zugeführt wird.

Die Gasmenge wird dem Arbeitstakt angepaßt, wobei die untere Grenze so gewählt wird, daß sich kein Feststoff absetzen kann.

Die obere Grenze wird so gewählt, daß sich eine tiefe ruhige Zone mit einer dicken Schaumschicht (20 - 50 cm) ausbilden kann und für den Produktionsablauf genügende Mengen erzeugt werden. Überschüssiger Schaum wird in dem äußeren Behälter aufgefangen und in den Vorratsbehälter zurückgeführt.

In die Schaumschicht (Durchmesser der einzelnen Blasen in der Regel bis zu 3 cm) des inneren Behälters wird der Keramikkörper eingetaucht und dabei so geführt, daß seine gesamte Oberfläche durch den Schaum benetzt wird und sich das Pigment auf ihr abscheiden kann. "Oberfläche" ist sachgerecht auszulegen, d.h. bei Tellern in der Regel nur die Vorderseite, bei Tassen und Vasen in der Regel nur die Außenseite.

Der so beschichtete Formkörper wird an der Luft bei Raumtemperatur getrocknet und anschließend nach üblichen Verfahren bei 1100 °C gebrannt.

Ergebnis:

Auf tiefschwarzem Grund zeichnet sich ein enges Netzwerk aus zum Teil scharf begrenzten, zum Teil diffusen weißen Ringen unterschiedlicher Größe ab, welche in ihrer Gesamtheit der Oberfläche ein "marmoriertes" Aussehen geben.

Entsprechend dem zuerst beschriebenen Beispiel wurde eine Trübe (Beispiel 2) hergestellt aus

1. 3,8 Gew.-Teilen Dodecylbenzolsuflonat-Na
2. 1,5 Gew.-Teilen Cocosfettsäurediethanolamid
3. 1,5 Gew.-Teilen Lauryl-dimethyl-aminoxid
4. 9,0 Gew.-Teilen Laurylethersulfat-Na (3 EO-Gruppen)
5. 3,6 Gew.-Teilen Bentonit ( 0,06 µm)
6. 300,0 Gew.-Teilen Cobaltsilikat *
7. 1200,0 Gew.-Teilen Bleimonosilikat *
8. 1480,6 Gew.-Teilen Leitungswasser 18 °dH

* Fa. Reimbold u. Strick, Köln

Der mit einer Glasur beschichtete ungebrannte Formkörper wird wie oben in die Schaumschicht (Blasendurchmesser in der Regel bis zu 6 cm) eingetaucht und anschließend gebrannt.

Ergebnis:

Auf weißem Grund zeichnet sich ein weitmaschiges Netzwerk blauer Ringe ab, wobei der Gesamteffekt ebenfalls noch als marmoriert bezeichnet werden kann. (vgl. beigefügte Abbildung)

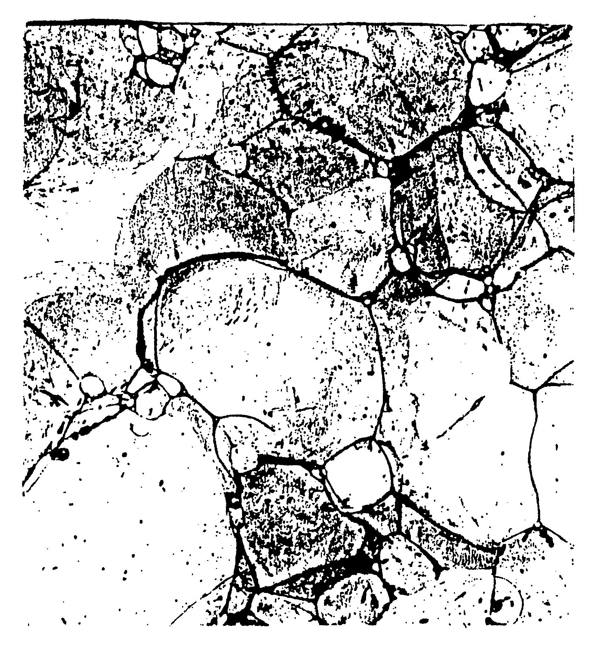

**Patentansprüche**

**1.** Verfahren zur Herstellung farbiger Dekorationen auf keramischen Erzeugnissen durch Aufbringen von

wässrigen Pigment- oder Farbkörpersuspensionen auf den Keramikkörper und anschließendes Einbrennen bei Temperaturen zwischen 600 - 1500 °C, dadurch gekennzeichnet,

**daß** die Pigment- oder Farbkörpersuspensionen unter Mitverwendung ein oder mehrerer grenzflächenaktiver Substanzen aufgeschäumt und der Keramikkörper mit der Schaumphase in Kontakt gebracht wird.

**2.** Verfahren nach Anspruch 1, dadurch gekennzeichnet,

**daß** als grenzflächenaktive Substanzen ein oder mehrere anionische, kationische oder nichtionische Tenside verwendet werden.

**3.** Verfahren nach Anspruch 1 und 2, dadurch gekennzeichnet,

**daß** als grenzflächenaktive Substanzen mindestens eine der Verbindungen,ausgewählt aus der Gruppe der Alkylbenzolsulfonate, Alkylsulfate, Alkylethersulfate, Aminoxide, Alkylsulfosuccinate, Alkanolamide mitverwendet wird.

**4.** Verfahren nach Anspruch 1 bis 3, dadurch gekennzeichnet,

**daß** die Tenside in Mengen von 0,001 bis 10 g pro 100 g Pigment mitverwendet werden.

## Claims

**1.** Process of the production of colored decorations on ceramic products by application of watery pigment or colorant suspensions on the ceramic body and subsequent heating at temperatures from 600 to 1500° C, **characterized** in that the pigment or colorant suspensions are caused to foam through the addition of one or several surface active agents and in that the ceramic body is brought into contact with the foam phase.

**2.** Process according to claim 1, **characterized** in that one or several anionic, cationic, non-ionic surfactants can be used as the surface active agents.

**3.** Process according to claim 1 and 2, **characterized** in that at least one of the compounds from the group of alkylbenzene sulfonates, alkylsulfates, alkyl ether sulfates, aminoxides, alkylsulfosuccinates and alkanolamides is added as the surface active agents.

**4.** Process according to claim 1 to 3, **characterized** in that the surfactants are added in quantities of 0.001 to 10 g per 100 g of pigment.

## Revendications

**1.** Procédé de fabrication de décorations colorées sur des produits en céramique, par application de suspensions de pigments ou de corps colorants sur le corps céramique et cuisson consécutive à des températures comprises entre 600 et 1500 °C,
caractérisé en ce que l'utilisation conjointe d'une ou de plusieurs substances tensio-actives fait mousser les suspensions de pigments ou de corps colorants et que le corps céramique est mis en contact avec la phase de moussage.

**2.** Procédé suivant la revendication n° 1, caractérisé en ce que

un ou plusieurs agents de surface anioniques, cationiques ou non-ioniques sont utilisés comme substances tensio-actives.

**3.** Procédé suivant les revendications n° 1 et 2, caractérisé en ce que

est utilisé conjointement, comme substance tensio-active, au moins l'un des composés sélectionné dans le groupe des sulfonates de benzène d'alkyle, sulfates d'alkyle, sulfates d'éther d'alkyle,

aminoxydes, sulfosuccinates d'alkyle, alkanolamides.

**4.** Procédé suivant les revendications n° 1 à 3, caractérisé en ce que

les agents de surface sont utilisés conjointement en quantités de 0,001 à 10 g par 100 g de pigment.